Europäisches Patentamt

European Patent Office

Office européen des brevets

(19)

(11) Veröffentlichungsnummer : **0 136 307 B1**

# (12) EUROPÄISCHE PATENTSCHRIFT

(45) Veröffentlichungstag der Patentschrift :
06.05.87

(21) Anmeldenummer : 84900847.9

(22) Anmeldetag : 03.02.84

(86) Internationale Anmeldenummer :
PCT/DE 84/00030

(87) Internationale Veröffentlichungsnummer :
WO/8403114 (16.08.84 Gazette 84/20)

(51) Int. Cl.⁴ : **E 01 H 1/08, G 01 N 3/22**

(54) KRAFTFAHRZEUG FÜR DEN EINSATZ BEI DER STRASSENREINIGUNG.

(30) Priorität : 09.02.83 DE 3304355

(43) Veröffentlichungstag der Anmeldung :
10.04.85 Patentblatt 85/15

(45) Bekanntmachung des Hinweises auf die Patenterteilung : 06.05.87 Patentblatt 87/19

(84) Benannte Vertragsstaaten :
AT BE CH DE FR GB LI LU NL SE

(56) Entgegenhaltungen :
DE-A- 2 221 201
US-A- 3 107 517
US-A- 3 364 727
US-A- 3 416 357

(73) Patentinhaber : SOLDECK, Hans
Freiligrathstrasse 16
D-5860 Iserlohn (DE)

(72) Erfinder : SOLDECK, Hans
Freiligrathstrasse 16
D-5860 Iserlohn (DE)

(74) Vertreter : Patentanwälte Dipl.-Ing. Conrad Köchling
Dipl.-Ing. Conrad-Joachim Köchling
Fleyer Strasse 135
D-5800 Hagen 1 (DE)

## Beschreibung

Die Erfindung betrifft ein Kraftfahrzeug für den Einsatz bei der Straßenreinigung mit einer Staub- bzw. Schmutzabsaugvorrichtung, die einen auf der Straßenoberfläche gleitenden Saugkopf, einen Schmutzsammelbehälter, sowie eine Abluftleitung umfaßt.

Derartige Kraftfahrzeuge sind hinreichend bekannt. Diese Kraftfahrzeuge fahren in ständigem Einsatz zum Zwecke der Straßenreinigung im wesentlichen entlang den Bordsteinkanten und nehmen durch eine entsprechende bzw. Schmutzabsaugvorrichtung über einen flexiblen Schlauch Staub und Schmutz von der Straße auf, wobei der Ansaugschlauch sich über ein Rollen- oder Gleitsystem auf der Straßenoberfläche abstützt und der zum Absaugen erforderliche Unterdruck durch ein entsprechend dimensioniertes Gebläse erzeugt wird, welches am entsprechenden Fahrzeug angebracht ist.

Der Schmutz wird in einen Schmutzsammelbehälter eingebracht, wobei die Abluft über eine Abluftleitung, die vorzugsweise mit einem Filter versehen ist, wieder an die Umwelt abgegeben wird.

Derartige Fahrzeuge bestreichen in relativen kurzen Zeitabständen das gesamte Straßennetz von Kommunen, Städten oder dergleichen.

Desweiteren ist aus der DE-AS 17 29 886 oder US-A-3 364 727 ein Kraftfahrzeug für den Einsatz beim Orten von Undichtigkeiten an erdverlegten Gasleitungen bekannt, welches ebenfalls das Straßennetz abfährt und dabei Undichtigkeiten an Gasleitungen feststellen soll. Da derartige Kraftfahrzeuge zur Erfassung von Undichtigkeiten an Gasleitungen relativ teuer sind, und zudem mindestens eine Bedienungsperson zur Führung dieses Kraftfahrzeuges und zur Bedienung der entsprechenden Geräte erforderlich ist, ist der finanzielle Aufwand zur Betreibung des Gasspürens ganz erheblich. Aus diesem Grunde werden nur relativ wenige Fahrzeuge eingesetzt, so daß die Prüfungsperiode für die Prüfung eines Straßenzuges derzeit mehrere Jahre beträgt.

Aufgabe vorliegender Erfindung ist es ausgehend von einem Stand der Technik gemäß eingangs bezeichneter Art, ein Kraftfahrzeug zu schaffen, welches die Vorteile von Reinigungsfahrzeugen und Gasspürfahrzeugen vereinigt und so einerseits den Personalaufwand erheblich verringert und andererseits auch die Anzahl der benötigten Kraftfahrzeuge erheblich reduziert.

Zur Lösung dieser Aufgabe schlägt die Erfindung vor, daß das Kraftfahrzeug zusätzlich ein Gasspürgerät trägt, welches z. B. in ansich bekannter Weise im wesentlichen aus einem in der Fahrerkabine angeordneten Gasanalysator mit Anzeigegerät, einer Gas- und Stromversorgungsanlage und einer Gaspumpe besteht, wobei außerhalb des Fahrzeuges nahe der Straßenoberfläche eine Ansaugvorrichtung für Gase angeordnet ist, mittels derer der zu analysierende Gasstrom einer Erfassungsvorrichtung beispielsweise einer Sonde bzw. einen Diffusionskopf zuführbar ist.

Prinzipiell löst die Erfindung die Aufgabe dadurch, daß das ohnehin zum Zwecke der Straßenreinigung ständig im Betrieb befindliche Kraftfahrzeug als Träger für mindestens ein Gasspürgerät benutzt wird, so daß ein zusätzliches Kraftfahrzeug für diese Gasspürgeräte entfällt. Darüber hinaus kann auch das für die Straßenreinigung zuständige Bedienungspersonal des Kraftfahrzeuges gleichzeitig die Bedienung des Gasspürgerätes übernehmen, so daß der Personalaufwand gegenüber der einfachen Straßenreinigung nicht erhöht wird. Das bisher notwendige zusätzliche Personal zum Gasspüren wird dabei eingespart. Darüber hinaus wird die Sicherheit der kommunalen Gasnetze durch diese erfindungsgemäße Einrichtung erheblich verbessert, da nunmehr die Prüfungsperiode von Gasleitungen auf relativ geringe Zeiträume von wenigen Tagen oder Wochen beschränkt werden kann. Die Funktionsweise der Gasspürgeräte ist derart, daß über eine Gaspumpe, mittels Sonden oder dergleichen außerhalb des Fahrzeuges Gasproben über den zu prüfenden Straßenzügen, das heißt über den entsprechenden Rohrtrassen angesaugt und über Schläuche dem Gasanalysator im Fahrzeug zugeführt werden.

Während entweder eine Bedienungsperson außerhalb des Fahrzeuges die Sonde über die Rohrtrasse führt, oder aber die Sonde fest am Fahrzeug installiert ist, so daß der Weg des Fahrzeuges auch den Weg der Sonde bestimmt, kann das Fahrzeug daneben seinem Reinigungszweck ohne weiteres nachkommen. Der Fahrer des Fahrzeuges kann vom Innenraum her die im Innenraum angebrachten Anzeigegeräte überwachen und Undichtigkeiten entweder manuell oder durch entsprechende Aufzeichnungsgeräte registrieren.

In Weiterbildung schlägt die Erfindung vor, daß die Erfassungseinrichtung im von der Staubabsaugvorrichtung erzeugten Luftstrom angeordnet ist.

Auf diese Weise wird das von der Reinigungsmaschine erzeugte relativ hohe Vakuum gleichzeitig zur Erfassung von Undichtigkeiten im Gasrohrnetz genutzt, wodurch eine sehr große Saugleistung zur Verfügung steht und die durchgesetzten Luftmengen pro Zeiteinheit ein der Meßgenauigkeit zuträgliches Maß erreichen.

Unter Umständen ergibt sich hierdurch die Möglichkeit, auf eigene Saugsysteme für das Gasspürgerät zu verzichten. Für diese Art der Aufspürung von Undichtigkeiten im Gasnetz ist insbesondere ein sogenannter Diffusionskopf brauchbar, der durch das Ansaugsystem durchgeströmte Gasanteile im Wege der Diffusion erfassen kann. Selbstverständlich sind auch andere bekannte Gasspürgeräte einsetzbar.

Die Nutzung der Absaugvorrichtung des Reinigungsfahrzeuges bewirkt zudem, daß auch bei nassen Straßenoberflächen eine Erfassung von Gasundichtigkeiten möglich ist. Bei feuchter Straßendecke ist mit bisher bekannten Gasspüreinrichtungen ein Erfassen von Undichtigkeiten praktisch nicht möglich, da die feuchte Straßendecke für aus dem Rohrleitungsnetz austretende Gase praktisch undurchlässig ist. Durch das von der Reinigungsmaschine erzeugte hohe Vakuum wird aber auch bei feuchten Straßendecken eine gewisse Durchlässigkeit erreicht.

Eine vorteilhafte Möglichkeit der Anordnung besteht darin, daß die Erfassungseinrichtung im Ansaugluftstrom angeordnet ist.

Alternativ oder zusätzlich ist möglich, daß die Erfassungseinrichtung im Abluftstrom angeordnet ist.

Hierdurch wird insbesonder erreicht, daß der dem Gasspürgerät zugeführte Luftstrom nicht von Schmutz- oder Staubpartikeln durchsetzt ist, so daß die Gasspüreinrichtung keiner hohen Verschmutzung unterworfen ist.

Weiterhin ist von Vorteil, daß die Erfassungseinrichtung in einem Bypass zur Hauptleitung der Staubabsaugvorrichtung angeordnet ist.

Insbesondere bei der Verwendung von Ansaugsonden zum Aufspüren von Leckstellen ist diese Ausbildung vorteilhaft, da eine unmittelbare Anordnung der Ansaugsonden im Absaugsystem der Reinigungsmaschine zur Folge hätte, daß die Gaspumpe der Ansaugsonde eine höhere Leistung haben müßte, als das Absaugsystem des Reinigungsgerätes. Durch Abzweigung einer Bypass-Leitung kann der Druck in dieser Zweigleitung herabgesetzt und damit die Leistung der mit der Ansaugsonde zusammenwirkenden Absaugpumpe gering gehalten werden.

Besonders vorteilhaft ist dabei, daß der Bypass durch Staubfilter oder dergleichen gegenüber der Hauptleitung abgeschirmt ist.

Hierdurch wird eine Verschmutzung des Gasspürgerätes weitestgehend verhindert. Allerdings ist bei der Verwendung von Diffusionsköpfen die Verschmutzung nur von untergeordneter Bedeutung, da diese Diffusionsköpfe relativ verschmutzungsunanfällig sind. In Weiterbildung wird vorgeschlagen, daß der durch die Staubabsaugvorrichtung im Ansaug- oder Abluftsystem erzeugte Überdruck im Bypass auf einen solchen Wert gemindert ist, daß dieser Druck niedriger als der von der Ansaugsonde bzw. Ansaugeinrichtung des Gasspürgerätes erzeugbare Druck ist.

Schließlich kann vorteilhaft sein, daß an mehreren Stellen der Staubabsaugvorrichtung, insbesondere eines mit dieser verbundenen Schlauches, Bypassleitungen abgezweigt sind, die statistisch in radialer und/oder axialer Richtung des Schlauches oder dergleichen verteilt angeordnet sind, und daß diese Bypassleitungen zu einer gemeinsamen Zuleitung für das Gasspürgerät vereinigt sind.

Hierdurch kann eine noch höhere Meßgenauigkeit beim Aufspüren von Leckstellen im Gasleitungssystem erreicht werden.

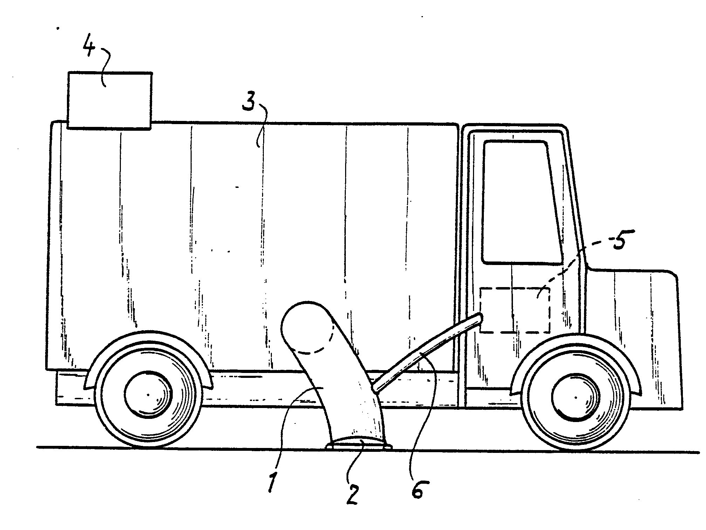

In der Zeichnung ist schematisch ein Ausführungsbeispiel der Erfindung dargestellt, welches im folgenden näher beschrieben ist.

Die Zeichnung zeigt ein Kraftfahrzeug für den Einsatz bei der Straßenreinigung.

Dieses Fahrzeug weist eine Staub- und Schmutzabsaugvorrichtung 1 auf, die einen auf der Straßenorberfläche gleitenden oder rollenden Saugkopf 2 sowie einen Schmutzsammelbehälter 3 aufweist. Aus dem Schmutzsammelbehälter mündet eine Abluftleitung 4 zur freien Atmosphäre hin aus.

Das Kraftfahrzeug trägt zusätzlich ein Gasspürgerät 5, welches bevorzugt in der Fahrerkabine des Kraftfahrzeuges angeordnet ist. Darüber hinaus sind auch der Gasanalysator und entsprechende Anzeigegeräte in der Fahrerkabine angeordnet. Die Gas- und Stromversorgungsanlage sowie die Gaspumpe können ebenfalls in der Fahrerkabine oder auch außerhalb derselben angeordnet sein. Die einzusetzenden Gasspürgeräte, die insbesondere zur Erfassung von $CH_4$ dienen, können nach bekannten Prinzipien arbeiten. Beispielsweise ist ein sogenanntes Ansaugsondensystem oder ein Diffusionskopfsystem brauchbar. Die Erfassungseinrichtung des Gasspürgerätes ist im von der Absaugvorrichtung 1 erzeugten Luftstrom angeordnet, wobei die Erfassungseinrichtung über einen schlauchartigen Bypass 6 mit der Staubabsaugvorrichtung verbunden ist. Der Bypass kann in geeigneter Weise durch Staubfilter oder dergleichen gegenüber der Hauptleitung abgeschirmt sein. Durch geeignete Reduzierventile kann der von der Staubabsaugvorrichtung im Ansaug- oder Abluftsystem der Reinigungsmaschine erzeugte Druck im Bypass auf einen solchen Wert gemindert werden, daß dieser Druck niedriger als der von der Gaspumpe der Ansaugsonde bzw. der Ansaugeinrichtung des Gasspürgerätes erzeugte Druck ist. Die Vorteile dieser Ausbildung gemäß Ausführungsbeispiel sind schon im Vorstehenden beschrieben worden.

**Patentansprüche**

1. Kraftfahrzeug für den Einsatz bei der Straßenreinigung mit einer Staub- bzw. Schmutzabsaugvorrichtung (1), die einen auf der Straßenoberfläche gleitenden Saugkopf (2), einen Schmutzsammelbehälter (3), sowie eine Abluftleitung (4) umfaßt, dadurch gekennzeichnet, daß das Kraftfahrzeug zusätzlich ein Gasspürgerät (5) trägt, welches z. B. in an sich bekannter Weise im wesentlichen aus einem in der Fahrerkabine angeordneten Gasanalysator mit Anzeigegerät, einer Gas- und Stromversorgungsanlage und einer Gaspumpe besteht, wobei außerhalb des Fahrzeuges nahe der Straßenoberfläche eine Ansaugvorrichtung für Gase angeordnet ist, mittels derer der zu analysierende Gasstrom einer Erfassungsvorrichtung beispielsweise einer Sonde bzw. einem Diffusionskopf zuführbar ist.

2. Kraftfahrzeug nach Anspruch 1, dadurch gekennzeichnet, daß die Erfassungseinrichtung im von der Staubabsaugvorrichtung erzeugten Luftstrom angeordnet ist.

3. Kraftfahrzeug nach Anspruch 1 und 2, dadurch gekennzeichnet, daß die Erfassungseinrichtung im Ansaugluftstrom angeordnet ist.

4. Kraftfahrzeug nach Anspruch 1 und Anspruch 2, dadurch gekennzeichnet, daß die Erfassungseinrichtung im Abluftstrom angeordnet ist.

5. Kraftfahrzeug nach einem der Ansprüche 1 bis 4, dadurch gekennzeichnet, daß die Erfassungseinrichtung in einem Bypass (6) zur Hauptleitung der Staubabsaugvorrichtung (1) angeordnet ist.

6. Kraftfahrzeug nach Anspruch 5, dadurch gekennzeichnet, daß der Bypass (6) durch Staubfilter oder dergleichen gegenüber der Hauptleitung (1) abgeschirmt ist.

7. Kraftfahrzeug nach einem der Ansprüche 1 bis 6, dadurch gekennzeichnet, daß der durch die Staubabsaugvorrichtung (1) im Ansaug- oder Abluftsystem erzeugte Druck, Unter- bzw. Überdruck im Bypass (6) auf einen solchen Wert gemindert ist, daß dieser Druck niedriger als der von der Ansaugsonde bzw. Ansaugeinrichtung des Gasspürgerätes erzeugbare Druck ist.

8. Kraftfahrzeug nach einem der Ansprüche 1 bis 7, dadurch gekennzeichnet, daß an mehreren Stellen der Staubabsaugvorrichtung (1), insbesondere eines mit dieser verbundenen Schlauches, Bypassleitungen (6) abgezweigt sind, die statistisch in radialer und/oder axialer Richtung des Schlauches oder dergleichen verteilt angeordnet sind, und daß diese Bypassleitungen (6) zu einer gemeinsamen Zuleitung für das Gasspürgerät (5) vereinigt sind.

## Claims

1. Vehicle for use in street cleaning with a dust and dirt suction device (1), which comprises a suction head (2) sliding over the surface of the street, a dirt collecting container (3) and an exhaust air duct (4), characterized in that the vehicle additionally carries a gas detection unit (5) which, e. g. in a way known per se, substantially consists of a gas analyser, arranged in the driver's cab, with display unit, a gas and power supply system and a gas pump, a suction device for gases being arranged outside the vehicle near to the surface of the street, by means of which the gas stream to be analysed can be fed to a recording device, for example a probe or a diffusion head.

2. Vehicle according to Claim 1, characterized in that the detection device is arranged in the air stream generated by the dust suction device.

3. Vehicle according to Claims 1 and 2, characterized in that the detection device is arranged in the intake air stream.

4. Vehicle according to Claim 1 and Claim 2, characterized in that the recording device is arranged in the exhaust air stream.

5. Vehicle according to one of Claims 1 to 4, characterized in that the detection device is arranged in a bypass (6) to the main duct of the dust suction device (1).

6. Vehicle according to Claim 5, characterized in that the bypass (6) is screened off from the main duct (1) by dust filters or the like.

7. Vehicle according to one of Claims 1 to 6, characterized in that the pressure, underpressure or overpressure generated in the intake or exhaust air system by the dust suction device (1) is reduced in the bypass (6) to such a value that this pressure is lower than the pressure which can be generated by the intake probe or intake device of the gas detection unit (5).

8. Vehicle according to one of Claims 1 to 7, characterized in that bypass lines (6) branch off at several points of the dust suction device (1), in particular of a hose connected to the latter, which bypass lines are arranged statistically distributed in radial and/or axial direction of the hose or the like, and in that these bypass lines (6) are combined into a joint supply line for the gas detection unit (5).

## Revendications

1. Véhicule à moteur destiné à être utilisé pour le nettoyage des voies publiques et pourvu d'un aspirateur (1) pour poussières et déchets divers, qui comprend une tête aspirante (2) glissant sur la surface de la chaussée, un conteneur (3) de collecte des déchets, ainsi qu'un conduit (4) de sortie d'air, caractérisé en ce qu'il transporte de plus un détecteur de gaz (5), qui se compose par exemple, selon un agencement connu en soi, d'un analyseur de gaz pourvu d'un indicateur et installé dans l'habitacle du conducteur, d'une installation d'alimentation en gaz et en électricité et d'une pompe à gaz, dans lequel un dispositif aspirateur pour gaz est installé en dehors de la coque du véhicule, à proximité de la surface de la chaussée, dispositif par lequel le courant de gaz à analyser peut être amené à un dispositif de détection, par exemple une sonde ou une tête de diffusion.

2. Véhicule selon la revendication 1, caractérisé en ce que le dispositif de détection est placé dans le flux d'air produit par le dispositif aspirateur de poussières.

3. Véhicule selon les revendications 1 et 2, caractérisé en ce que le dispositif de détection est placé dans le courant d'air aspiré.

4. Véhicule selon les revendications 1 et 2, caractérisé en ce que le dispositif de détection est placé dans le flux d'air sortant.

5. Véhicule selon les revendications 1 à 4, caractérisé en ce que le dispositif de détection est placé dans une dérivation (6) sur le conduit principal du dispositif aspirateur (1) de poussières.

6. Véhicule selon la revendication 5, caractérisé en ce que la dérivation (6) est protégée, vis-à-vis du conduit principal (1), par un filtre à poussières ou un dispositif analogue.

7. Véhicule selon l'une des revendications de 1 à 6, caractérisé en ce que la pression, respectivement dépression ou surpression, produite par le dispositif aspirateur de poussières, respectivement dans le système d'aspiration ou dans le système de refoulement, est réduite dans la dérivation (6) à une valeur telle que cette pression est inférieure à celle pouvant être produite respectivement par la sonde d'aspiration ou le dispositif d'aspiration du détecteur de gaz.

8. Véhicule selon l'une des revendications de 1 à 7, caractérisé en ce que des conduits de dérivation (6) sortent en plusieurs points du dispositif aspirateur de poussières (1), notamment d'un tuyau relié à ce dispositif, conduits qui sont placés statistiquement dans le sens radial et/ou axial du tuyau ou analogue, et caractérisé également en ce que les conduits de dérivation (6) sont réunis de façon à former un canal d'adduction commun pour le détecteur de gaz (5).

0 136 307

1